# FASCICULE DE BREVET EUROPEEN

(11) **EP 2 850 023 B1**
(45) Date de publication et mention de la délivrance du brevet: **27.07.2016**
(21) Numéro de dépôt: 13723133.8
(22) Date de dépôt: 15.05.2013
(51) Int. Cl.: B65G 21/20

(54) **LONGERON POUR CONVOYEUR, ET ASSEMBLAGE COMPRENANT UN TEL LONGERON ET UNE PLURALITE DE CROCHETS PORTE-CABLES**
LÄNGLICHES ELEMENT FÜR EINEN FÖRDERER, ANORDNUNG MIT SOLCH EINEM LÄNGLICHEN ELEMENT UND MEHREREN KABELTRAGENDEN/-ABDECKENDEN HAKEN
LONGITUDINAL MEMBER FOR A CONVEYOR, AND ASSEMBLY COMPRISING SUCH A LONGITUDINAL MEMBER AND A PLURALITY OF CABLE-CARRYING/COVER-SECURING HOOKS

(30) Priorité: 16.05.2012 FR 1254535
(43) Date de publication de la demande: 25.03.2015
(73) Titulaire: Savoye, 21000 Dijon (FR)
(72) Inventeur: COLLOT, Patrick, F-21250 Corberon (FR); MARIUSSE, Adrien, F-71100 Chalon Sur Saône (FR)
(74) Mandataire: Vidon Brevets & Stratégie
(86) Numéro de dépôt international: PCT/EP2013/060094
(87) Numéro de publication internationale: WO 2013/171285

(56) Documents cités:
- DE-U1-202005 020 117
- JP-A- H10 181 829
- JP-A- 2003 292 136
- US-A- 3 540 561
- US-A- 5 361 894
- US-A1- 2011 303 434
- US-B1- 6 830 146

## Description

### 1. DOMAINE DE L'INVENTION

Le domaine de l'invention est celui du convoyage de charges isolées, lourdes ou légères.

Plus précisément, l'invention concerne un longeron pour convoyeur de charges, et notamment mais non exclusivement pour convoyeur à rouleaux (libres et motorisés), convoyeur à galets, convoyeur à bande, convoyeur à chaînes (par exemple chaînes à palettes), etc.

L'invention s'applique notamment, mais non exclusivement, dans le domaine de la production ou de la logistique.

### 2. ARRIÈRE-PLAN TECHNOLOGIQUE

On s'attache plus particulièrement dans la suite de ce document à décrire la problématique existant dans le cas d'un convoyeur à rouleaux. L'invention ne se limite bien sûr pas à ce cas particulier de convoyeur, mais présente un intérêt pour tout convoyeur devant faire face à une problématique proche ou similaire.

De manière classique, un convoyeur à rouleaux comprend deux longerons longitudinaux assemblés par des traverses (aussi appelées entretoises transversales), l'ensemble constituant un cadre rigide.

Des rouleaux de convoyage sont disposés à l'intérieur de ce cadre rigide, afin de former une zone de convoyage utile. A cet effet, chaque longeron comprend une pluralité d'orifices adaptés chacun pour recevoir un axe d'un des rouleaux.

L'entraînement de l'ensemble des rouleaux de convoyage est par exemple assuré par un rouleau motorisé, qui entraîne en cascade les autres rouleaux (deux rouleaux adjacents étant reliés par une courroie, ou tout autre moyen d'entraînement).

On peut distinguer deux mises en oeuvre d'un convoyeur à rouleaux, selon que les longerons assurent ou non une fonction de guidage d'une charge transportée par les rouleaux.

Selon une première technique connue, on utilise uniquement des longerons simples (sans rive de guidage intégrée) et :
- dans la mise en oeuvre avec la fonction de guidage, une rive de guidage (c'est-à-dire un élément mécanique de guidage) est rapporté sur chaque longeron et dépasse d'un plan de roulement des rouleaux ;
- dans la mise en oeuvre sans la fonction de guidage, les longerons simples sont utilisés sans rives de guidage. Aucune partie du longeron (ni aucun élément fixé à celui-ci) ne dépasse donc du plan de roulement des rouleaux. Ceci permet de transporter des charges plus larges que la largeur utile du convoyeur.

Un inconvénient majeur de cette première technique connue est qu'elle nécessite, dans la mise en oeuvre avec la fonction de guidage, un temps de montage important du fait qu'il est nécessaire de fixer une rive de guidage sur chaque longeron simple. Ceci est d'autant plus gênant que les opérations de montage sont bien souvent réalisées sur le site client (site d'installation final).

Un autre inconvénient de cette première technique connue est qu'elle nécessite de fabriquer et gérer (y compris en termes de stockage et transport jusqu'au site client) d'une part les longerons simples et d'autres part les rives de guidage.

Selon une deuxième technique connue, on utilise des longerons plus complexes, intégrant une rive de guidage, pour la mise en oeuvre avec la fonction de guidage.

Un inconvénient majeur de cette deuxième technique connue est qu'elle nécessite de fabriquer et gérer (y compris en termes de stockage et transport jusqu'au site client) deux types de longerons (à savoir des longerons simples, sans rive de guidage, et des longerons plus complexes, avec rive de guidage).

Un autre inconvénient, commun aux première et seconde techniques connues précitées, est que le temps de montage est encore augmenté du fait qu'il est nécessaire de fixer, sur chaque longeron, un chemin de câbles ou une goulotte de support de câbles. Ceci est d'autant plus gênant que, comme déjà mentionné plus haut, les opérations de montage sont bien souvent réalisées sur le site client.

Un autre inconvénient, commun aux première et seconde techniques connues précitées, est qu'il n'est pas aisé de personnaliser l'apparence du convoyeur, qui est liée dans les première et seconde techniques connues à l'apparence des longerons et des chemins de câbles ou des goulottes de support de câbles.

De 24 2005 020117 U1 décrit un longeron selon le préambule de la revendication 1.**3. OBJECTIFS DE L'INVENTION**

L'invention, dans au moins un mode de réalisation, a notamment pour objectif de pallier ces différents inconvénients de l'état de la technique.

Plus précisément, dans au moins un mode de réalisation de l'invention, un objectif est de fournir un nouveau type de longeron, permettant de réduire le temps de montage des convoyeurs, que ces derniers soient mis en oeuvre avec ou sans la fonction de guidage.

Un autre objectif d'au moins un mode de réalisation de l'invention est de fournir un nouveau type de longeron, permettant de réduire les coûts de fabrication et stockage.

Un autre objectif d'au moins un mode de réalisation de l'invention est de fournir un nouveau type de longeron, ne nécessitant pas d'élément mécanique additionnel de type chemin de câbles ou goulotte de support de câbles.

Un autre objectif d'au moins un mode de réalisation de l'invention est de fournir un nouveau type de longeron, permettant de personnaliser facilement l'apparence des convoyeurs.

### 4. EXPOSÉ DE L'INVENTION

Selon l'invention, il est proposé un longeron selon la revendication 1.

Le principe général de ce mode de réalisation particulier de l'invention consiste donc à proposer un longeron qui intègre un élément de guidage (aussi appelé rive de guidage) et est réversible, avec un premier sens de montage, dans lequel le longeron (et plus précisément l'élément de guidage intégré au longeron) assure la fonction de guidage, et un second sens de guidage, dans lequel le longeron n'assure pas la fonction de guidage. Le choix du sens de montage est réalisé au moment de l'assemblage de la structure mécanique du convoyeur.

Ainsi, ce mode de réalisation particulier de l'invention repose sur une approche tout à fait nouvelle et inventive, permettant de n'utiliser qu'un seul type de longeron, sans pour autant nécessiter le montage (la fixation) sur le longeron d'une pièce mécanique de guidage (guide de rivage) dans le cas où le convoyeur doit assurer la fonction de guidage. On réduit ainsi le temps de montage du convoyeur. On réduit également les coûts de fabrication et stockage des longerons, et donc des convoyeurs (la réduction du nombre de référence de longeron permet une massification des achats, et donc des coûts de matière).

La nature des éléments de support des charges est fonction du type de convoyeur. Par exemple, les éléments de support des charges sont :
- dans le cas d'un convoyeur à rouleaux : des rouleaux ;
- dans le cas d'un convoyeur à galets : des axes supportant des galets ;
- dans le cas d'un convoyeur à bande : un tambour de commande, un rouleau d'extrémité et un châssis porteur (avec une sole de glissement qui assure le soutien de la bande) ;
- dans le cas d'un convoyeur à chaînes : un châssis porteur des chaînes ;
- etc.

Aucun élément mécanique additionnel, de type chemin de câblés ou goulotte de support de câbles; n'est nécessaire. C'est la cavité du corps principal dû longeron qui accueille le ou les câbles qui cheminent le long du convoyeur, ainsi que le ou les éléments de pilotage du convoyeur (carte électronique par exemple).

Comme les orifices (adaptés chacun pour recevoir une extrémité d'un élément de support de charges) débouchent dans la cavité, ceci permet de faciliter le démontage des éléments de support des charges (rouleaux dans le cas d'un convoyeur à rouleaux).

Selon une caractéristique particulière, le longeron est une pièce profilée comprenant le corps principal et l'élément de guidage.

Le longeron (corps principal et élément de guidage) peut ainsi être fabriqué à faible coût, par exemple par pliage d'une feuille de tôle.

Dans un autre mode de réalisation particulier de l'invention, il est proposé un assemblage comprenant : un longeron tel que précité (dans l'un quelconque des modes de réalisation présentés ci-dessus) ; et une pluralité de crochets porte-câbles fixés au longeron, à l'intérieur de la cavité. En outre, le corps principal du longeron comprend, dans la partie centrale du profil en « C » :
- un troisième ensemble d'orifices, débouchant dans la cavité, situés à une troisième distance prédéterminée (H1'+H1) de la deuxième branche latérale du corps principal, et destinés chacun à recevoir un élément de fixation d'un des crochets porte-câbles quand le longeron est monté selon le premier sens ; et
- un quatrième ensemble d'orifices, débouchant dans la cavité, situés à une quatrième distance prédéterminée (H2'+H2) de la première branche latérale du corps principal, et destinés chacun à recevoir un élément de fixation d'un des crochets porte-câbles quand le longeron est monté selon le second sens.

Ainsi, la pluralité de crochets porte-câbles permet de faciliter et d'organiser le support du ou des câbles à l'intérieur de la cavité du corps principal du longeron.

Selon une caractéristique particulière, au moins un des crochets porte-câbles est fixé au longeron par un élément de fixation servant également à fixer le lorigeron sur une traverse ou une éclisse.

Ainsi, on utilise les traverses (constituant, avec les longerons, le cadre rigide du convoyeur) pour fixer les crochets porte-câbles sur les longerons.

Selon une caractéristique particulière, l'assemblage comprend au moins un capot adapté pour se fixer sur la pluralité de crochets porte-câbles et fermer la cavité.

Le capot permet de fermer la cavité. Il n'a pas d'autre rôle fonctionnel, ce qui autorise une personnalisation facile de l'apparence du convoyeur, par exemple par le choix de l'aspect du capot (couleur, dessin, texte, etc).

Selon une caractéristique particulière, les orifices du premier ensemble sont alignés sur une première droite, les orifices du deuxième ensemble sont alignés sur une deuxième droite, les orifices du troisième ensemble sont alignés sur une troisième droite, les orifices du quatrième ensemble sont alignés sur une quatrième droite, et la distance entre les première et troisième droites est égale à la distance entre les deuxième et quatrième droites.

Ainsi, si deux longerons accolés ne sont pas montés dans le même sens (c'est-à-dire l'un assurant la fonction de guidage, tandis que l'autre non), il n'y a pas de décalage vertical entre des crochets porte-câbles fixés sur l'un des longerons, et des crochets porte-câbles fixés sur l'autre des longerons. Il y a donc continuité entre deux capots fixés chacun sur l'un des deux longerons accolés. Il est même possible de monter un capot à cheval sur les deux longerons accolés.

Dans un autre mode de réalisation particulier de l'invention, il est proposé un assemblage comprenant : un longeron tel que précité (dans l'un quelconque des modes de réalisation présentés ci-dessus) ; et au moins une pièce de guidage fixée au longeron. En outre, le corps principal du longeron comprend :
- dans la deuxième branche latérale du corps principal, un cinquième ensemble d'orifices, débouchant dans la cavité et destinés chacun à recevoir un élément de fixation de ladite au moins une pièce de guidage, rapportée par le dessus au longeron, quand le longeron est monté selon le premier sens; et
- dans la première branche latérale du corps principal, un sixième ensemble d'orifices, débouchant dans la cavité et destinés chacun à recevoir un élément de fixation de ladite au moins une pièce de guidage, rapportée par le dessus au longeron, quand le longeron est monté selon le second sens.

Ainsi, on peut distinguer quatre types de montage :
- montage avec longeron assurant la fonction de guidage (grâce à l'élément de guidage intégré au longeron), et avec une pièce de guidage rapportée assurant un guidage supplémentaire à un autre niveau vertical ;
- montage avec longeron assurant la fonction de guidage (grâce à l'élément de guidage intégré au longeron), et sans pièce de guidage rapportée ;
- montage avec longeron n'assurant pas la fonction de guidage, et avec une pièce de guidage rapportée assurant un guidage à un autre niveau vertical ;
- montage avec longeron n'assurant pas la fonction de guidage, et sans pièce de guidage rapportée.

Selon une caractéristique particulière, les orifices du premier ensemble sont alignés sur une première droite, les orifices du deuxième ensemble sont alignés sur une deuxième droite, les orifices du cinquième ensemble sont alignés sur une cinquième droite, les orifices du sixième ensemble sont alignés sur une sixième droite, et la distance entre les première et cinquième droites est égale à la distance entre les deuxième et sixième droites.

Ceci permet d'assurer une continuité (pas de décalage vertical) entre deux pièces de guidage rapportées chacune sur un longeron d'une paire de longerons accolés qui ne sont pas montés dans le même sens. Ceci permet également d'assurer une continuité (pas de décalage vertical) pour une pièce de guidage rapportée à cheval sur deux longerons accolés qui ne sont pas montés dans le même sens. Il est donc possible d'utiliser un seul type de pièce de guidage rapportée.

Dans un autre mode de réalisation particulier de l'invention, il est proposé un assemblage comprenant : un longeron tel que précité (dans l'un quelconque des modes de réalisation présentés ci-dessus) ; et au moins un pied fixé au longeron. En outre, le corps principal du longeron comprend :
- dans la première branche latérale du corps principal, un septième ensemble d'orifices, débouchant dans la cavité et destinés chacun à recevoir un élément de fixation dudit au moins un pied, rapporté par le dessous au longeron, quand le longeron est monté selon le premier sens ; et
- dans la deuxième branche latérale du corps principal, un huitième ensemble d'orifices, débouchant dans la cavité et destinés chacun à recevoir un élément de fixation dudit au moins un pied, rapporté par le dessous au longeron, quand le longeron est monté selon le second sens.

Selon une caractéristique particulière, les orifices du premier ensemble sont alignés sur une première droite, les orifices du deuxième ensemble sont alignés sur une deuxième droite, les orifices du septième ensemble sont alignés sur une septième droite, les orifices du huitième ensemble sont alignés sur une huitième droite, et la distance entre les première et septième droites est égale à la distance entre les deuxième et huitième droites.

Ceci permet d'assurer une continuité (pas de décalage vertical) entre deux pieds rapportés chacun sur un longeron d'une paire de longerons accolés qui ne sont pas montés dans le même sens. Il est donc possible d'utiliser un seul type de pied.

Selon une caractéristique particulière, le sixième ensemble d'orifices et le septième ensemble d'orifices sont confondus, et le cinquième ensemble d'orifices et le huitième ensemble d'orifices sont confondus.

Ainsi, on réduit le nombre d'orifices et on simplifie la fabrication des longerons.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1 et 2 sont deux vues (respectivement, vue de dessus en perspective, et vue de dessous et en perspective) d'un premier exemple de convoyeur selon l'invention, comprenant deux longerons montés pour assurer une fonction de guidage ;
- la figure 3 est une vue de côté du longeron droit du convoyeur des figures 1 et 2 ;
- les figures 4 et 5 sont deux vues (respectivement, vue de dessus et en perspective, et vue de dessous et en perspective) d'un second exemple de convoyeur comprenant deux longerons montés pour ne pas assurer une fonction de guidage ;
- la figure 6 est une vue de côté du longeron droit du convoyeur des figures 4 et 5 ;
- la figure 7 est une vue en perspective d'un longeron selon un mode de réalisation particulier de l'invention ;
- la figure 8 présente une vue de dessus et en perspective de deux convoyeurs adjacents, montés sur pieds et comprenant chacun deux longerons selon la figure 7, montés en sens inverse (l'un assurant la fonction de guidage et l'autre non) ;
- la figure 9 illustre trois égalités entre des distances inter-orifices du longeron de la figure 7, permettant d'assurer diverses continuités (continuité pour des capots, continuité pour des pièces de guidage rapportées et continuité pour des pieds).

### 6. DESCRIPTION DÉTAILLÉE

Dans la suite de description, on considère, à titre d'exemple uniquement, que chaque convoyeur est un convoyeur à rouleaux comprenant deux longerons longitudinaux assemblés par deux traverses, ainsi que des rouleaux de convoyage. Par exemple, l'un des rouleaux est motorisé et entraîne les autres rouleaux libres par un montage en cascade (deux rouleaux adjacents étant reliés par une courroie, ou tout autre moyen d'entraînement).

Il est clair cependant que l'invention n'est pas limitée à ce type de convoyeur de charges, mais s'applique également à d'autres types de convoyeur : convoyeur à galets, convoyeur à bande, convoyeur à chaînes, etc.

Sur toutes les figures du présent document, les éléments identiques sont désignés par une même référence numérique (notamment 4 pour les rouleaux, 5 pour les courroies, 6 pour les traverses, 7 pour les crochets porte-câbles, 8 pour le capot).

Le principe général de l'invention consiste à utiliser un seul type de longeron 70, réversible et pouvant être monté selon un premier sens, pour assurer une fonction de guidage, ou selon un second sens, pour ne pas assurer la fonction de guidage. En d'autres termes, tous les longerons apparaissant sur les différentes figures sont identiques.

On distingue quatre manières de monter le longeron 70 de l'invention, en tenant compte d'une part du sens (avec (« a ») ou sans (« s ») fonction de guidage) selon lequel il est monté, et d'autre part du côté (gauche (« g ») ou droite (« d »)) du convoyeur où il est monté ;
- quand il est monté dans le sens assurant la fonction de guidage et à gauche, le longeron est référencé 70_{a,g} sur les figures ;
- quand il est monté dans le sens n'assurant pas la fonction de guidage et à gauche, le longeron est référencé 70s_{s,g} sur les figures ;
- quand il est monté dans le sens assurant la fonction de guidage et à droite, le longeron est référencé 70_{a,d} sur les figures ;
- quand il est monté dans le sens n'assurant pas la fonction de guidage et à droite, le longeron est référencé 70s_{s,d} sur les figures.

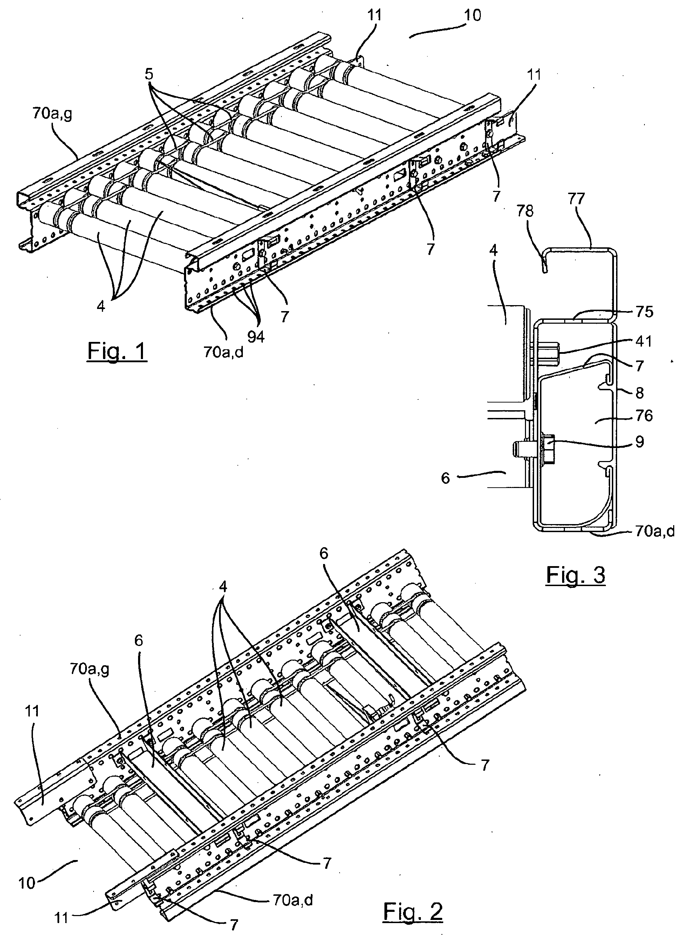

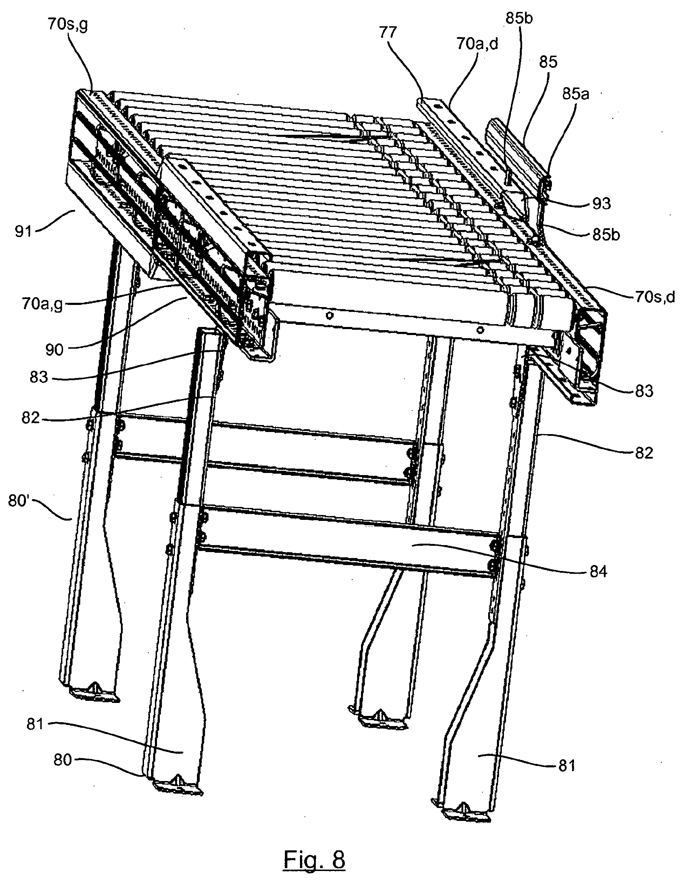

Il est à noter que les deux longerons (droit et gauche) d'un même convoyeur peuvent être montés soit selon le même sens (cas des figures 1 à 6), soit selon des sens différents (cas de la figure 8).

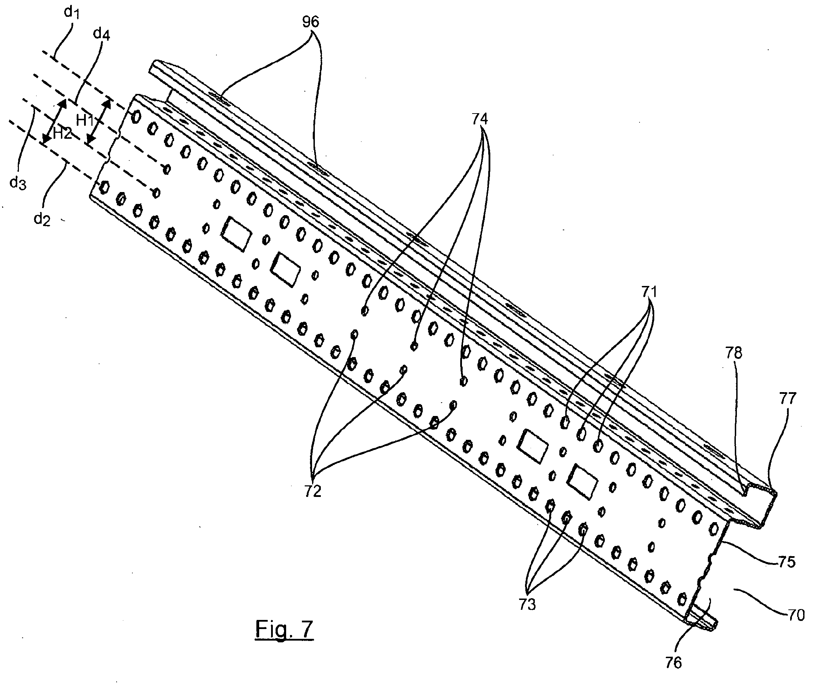

On présente tout d'abord, en relation avec la **figure 7****,** un mode de réalisation particulier du longeron 70 selon l'invention.

Dans ce mode de réalisation particulier, le longeron est une pièce profilée comprenant un corps principal 75, à partir duquel s'étend un élément de guidage 77. Il s'agit par exemple d'une pièce métallique obtenue par un procédé de pliage.

Dans cet exemple, le longeron est rectiligne. Mais la présente invention n'est pas limitée à cette forme et s'applique à d'autres formes de longeron (notamment une forme cintrée).

L'élément de guidage 77 comprend une surface de guidage 78, jouant le rôle de rive de guidage quand le longeron est monté dans le sens où il doit assurer la fonction de guidage.

Le corps principal 75 possède un profil en forme de « C », définissant une cavité 76 adaptée pour accueillir des câbles et des éléments de pilotage du convoyeur (carte électronique de pilotage par exemple).

Le profil en « C » comprend : une partie centrale, une première branche latérale s'étendant sensiblement perpendiculairement à partir d'une première extrémité de la partie centrale, et une deuxième branche latérale s'étendant sensiblement perpendiculairement à partir d'une deuxième extrémité de la partie centrale. L'élément de guidage 77 s'étend à partir de la deuxième branche latérale du corps principal.

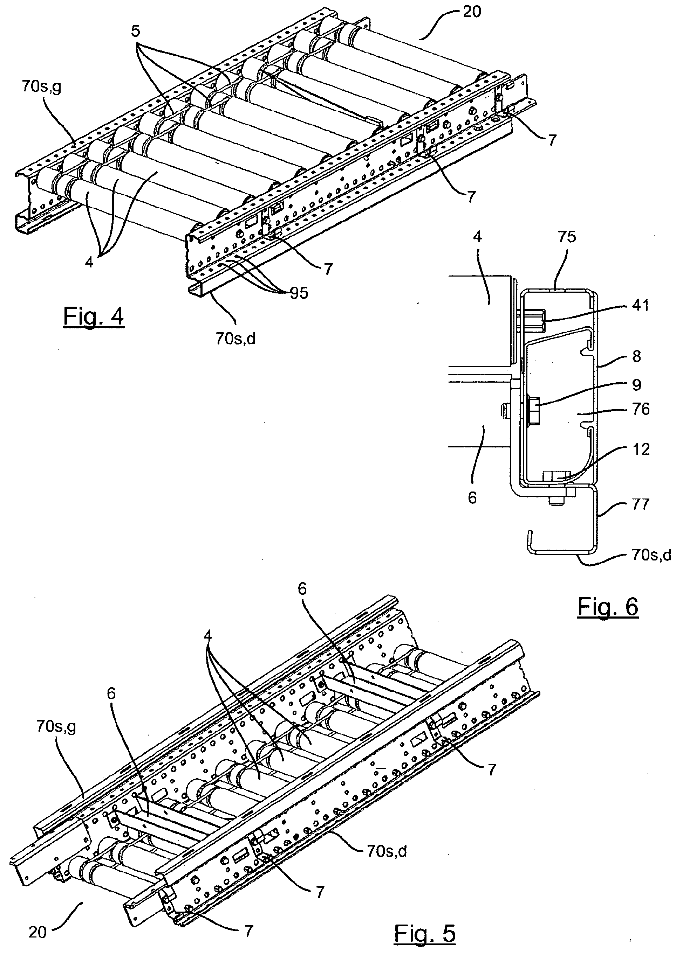

Le corps principal 75 comprend (dans la partie centrale du profil en « C ») différents orifices qui débouchent dans la cavité 76, et notamment :
- des orifices 71 alignés sur une ligne d1 (ils sont situés à une première distance prédéterminée H1' de la deuxième branche latérale du corps principal) et adaptés chacun pour recevoir un axe 41 d'un des rouleaux 4 quand le longeron est monté pour assurer la fonction de guidage (cf figures 1 à 3) ;
- des orifices 73 alignés sur une ligne d2 (ils sont situés à une deuxième distance prédéterminée H2' de la première branche latérale du corps principal) et adaptés chacun pour recevoir un axe 41 d'un des rouleaux 4 quand le longeron est monté pour ne pas assurer la fonction de guidage (cf figures 4 à 6) ;
- des orifices 72 alignés sur une ligne d3 (ils sont situés à une troisième distance prédéterminée (H1'+H1) de la deuxième branche latérale du corps principal) et adaptés chacun pour recevoir un élément de fixation 9 (vis à embase crantée par exemple) d'un crochet porte-câble 7 quand le longeron est monté pour assurer la fonction de guidage (cf figures 1 à 3) ; et
- des orifices 74 alignés sur une ligne d4 (ils sont situés à une quatrième distance prédéterminée (H2'+H2) de la première branche latérale du corps principal) et adaptés chacun pour recevoir un élément de fixation 9 d'un crochet porte-câble 7 quand le longeron est monté pour ne pas assurer la fonction de guidage (cf figures 4 à 6).

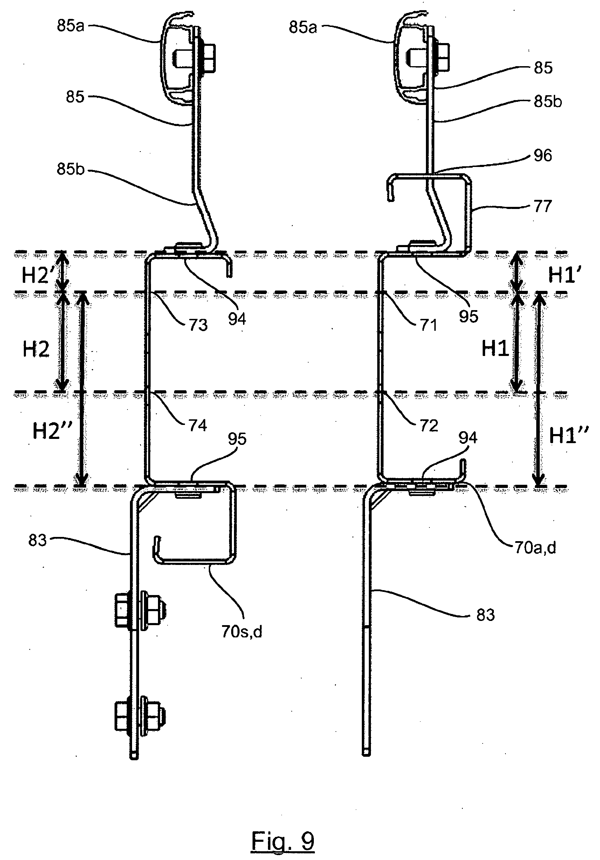

Comme illustré sur la figure 9, le longeron est réversible et possède deux sens de montage :
- un premier sens (partie droite de la figure 9) dans lequel : l'élément de guidage se trouve en dessus du corps principal ; la cavité 76 s'ouvre à l'opposé des éléments de support de charges; et chacun des orifices 71 du premier ensemble peut recevoir une extrémité d'un des éléments de support de charges ;
- un deuxième sens (partie gauche de la figure 9) dans lequel : l'élément de guidage se trouve en dessous du corps principal ; la cavité 76 s'ouvre à l'opposé des éléments de support de charges ; et chacun des orifices 73 du deuxième ensemble peut recevoir une extrémité d'un des éléments de support de charges.

Les **figures 1 à 3** présentent un premier exemple de convoyeur 10 comprenant deux longerons 70_{a,g} et 70_{a,d} montés tous les deux pour assurer la fonction de guidage.

Pour chaque longeron, l'élément de guidage 77 se trouve en dessus du corps principal 75, et dépasse d'un plan de roulement des rouleaux 4. Plus précisément, c'est la surface de guidage 78 (comprise dans l'élément de guidage 77) qui joue le rôle de rive de guidage.

L'axe de chaque rouleau 4 pénètre dans un des orifices référencés 71 sur la figure 7.

On a également représenté sur les figures 1 et 2 (ainsi que sur les figures 4 et 5), des éclisses 11 qui permettent chacune d'assembler deux longerons adjacents. Chaque éclisse 11 est par exemple fixée avec des vis à embase crantée 9, 12 sur chacun des longerons.

La cavité 76 définie par le corps principal 75 (dont le profil est en forme de « C ») est ouverte vers l'extérieur et peut accueillir des câbles et des éléments de pilotage du convoyeur (non représentés).

Afin de faciliter le guidage des câbles, des crochets porte-câbles 7 sont situés dans la cavité 76 du corps principal 75. Chaque crochet porte-câble 7 est fixé au corps principal 75 par un élément de fixation 9 (par exemple une vis à embase crantée), via un des orifices référencés 72 sur la figure 7.

Plus précisément, dans l'exemple des figures 1 à 3, chaque crochet porte-câble 7 est fixé au corps principal 75 par un élément de fixation 9 qui a également pour fonction de fixer le longeron avec une des traverses 6 ou une des éclisses 11.

Comme illustré sur la figure 3 à travers le cas particulier du longeron droit 70_{a,d} avec fonction de guidage opérationnelle, un capot 8 (aussi appelé cache ou carter) ferme la cavité 76 du corps principal 75, en se fixant (par exemple par clipsage) sur les extrémités libres des crochets porte-câbles 7 (ces derniers étant en forme de « C »).

Les **figures 4 à 6** présentent un second exemple de convoyeur 20 comprenant deux longerons 70_{s,g} et 70_{s,d} montés tous les deux pour ne pas assurer la fonction de guidage.

Pour chaque longeron, l'élément de guidage 77 se trouve en dessous du corps principal 75, et aucune partie du longeron ne dépasse du plan de roulement des rouleaux 4.

L'axe de chaque rouleau 4 pénètre dans un des orifices référencés 73 sur la figure 7.

Comme dans le cas des figures 1 à 3, la cavité 76 définie par le corps principal 75 est ouverte vers l'extérieur et peut accueillir des câbles et des éléments de pilotage du convoyeur (non représentés). En effet, on passe du cas des figures 1 à 3 à celui des figures 4 à 6 en retournant chaque longeron (rotation de 180°).

Comme dans le cas des figures 1 à 3, afin de faciliter le guidage des câbles, des crochets porte-câbles 7 sont situés dans la cavité 76 du corps principal 75. Chaque crochet porte-câble 7 est fixé au corps principal 75 par un élément de fixation 9 (par exemple une vis à embase crantée), via un des orifices référencés 74 sur la figure 7.

Egalement comme dans le cas des figures 1 à 3, un capot 8 ferme la cavité 76 du corps principal 75, en se fixant (par exemple par clipsage) sur les extrémités libres des crochets porte-câbles 7 (ceci est illustré sur la figure 6 à travers le cas particulier du longeron droit 70_{s,d} avec fonction de guidage non opérationnelle).

La **fleure 8** présente une vue de dessus et en perspective de deux convoyeurs adjacents 90, 91, montés sur deux pieds identiques 80, 80'. Chacun des deux convoyeurs comprend deux longerons montés en sens inverse (l'un assurant la fonction de guidage et l'autre non) :
- le convoyeur 90 comprend un longeron gauche 70_{a,g} monté pour assurer la fonction de guidage et un longeron droit 70_{s,d} monté pour ne pas assurer la fonction de guidage ;
- le convoyeur 91 comprend un longeron gauche 70_{s,g} monté pour ne pas assurer la fonction de guidage et un longeron droit 70_{a,d} monté pour assurer la fonction de guidage.

Sur la figure 8, on a également représenté des pièces de jonction 93 assurant l'interface (pour des raisons de sécurité) entre les longerons consécutifs qui sont montés en sens inverse. Il s'agit par exemple de pièces en plastique en forme de demi-pyramide, venant s'emboîter dans l'extrémité creuse de l'élément de guidage 77.

Chaque pied comprend deux ensembles reliés par une traverse 84 (ou plusieurs en fonction de la hauteur et/ou de la rigidité souhaitée pour l'ensemble), chaque ensemble comprenant lui-même une embase 81, une coulisse 82 et une équerre 83 (ces trois pièces étant solidarisées entre elles, par exemple par vis et écrous). L'équerre 83 est elle-même fixée sur l'un des longerons, par un élément de fixation (par exemple une vis) traversant un orifice du longeron, et plus précisément :
- un des orifices référencés 94 (voir également figure 1) et situés sur la partie inférieure du profil en « C » du corps du longeron, quand le longeron est monté pour assurer la fonction de guidage (cf partie droite de la figure 9) ;
- un des orifices référencés 95 (voir également figure 4) et situés sur la partie inférieure du profil en « C » du corps du longeron, quand le longeron est monté pour ne pas assurer la fonction de guidage (cf partie gauche de la figure 9).

Dans l'exemple de la figure 9, on a également représenté une pièce de guidage 85, qui est rapportée par le dessus à deux longerons adjacents 70_{s,d} et 70_{a,d}. Dans une variante, chaque pièce de guidage 85 peut être rapportée par le dessus sur un seul longeron.

Dans cet exemple, la pièce de guidage 85 comprend un élément profilé de guidage 85a, monté sur deux supports 85b, par exemple par vis. L'extrémité de chaque support 85b est plane et fixée sur l'un des longerons, par un élément de fixation (par exemple une vis) traversant un orifice du longeron, et plus précisément :
- un des orifices référencés 95 et situés sur la partie supérieure du profil en « C » du corps du longeron (c'est-à-dire sur la deuxième branche latérale du corps principal du longeron), quand le longeron est monté pour assurer la fonction de guidage (cf partie droite de la figure 9) ;
- un des orifices référencés 94 et situés sur la partie supérieure du profil en « C » du corps du longeron (c'est-à-dire sur la première branche latérale du corps principal du longeron), quand le longeron est monté pour ne pas assurer la fonction de guidage (cf partie gauche de la figure 9).

Ainsi, dans le cas particulier illustré par les figures 8 et 9, les orifices référencés 94 et ceux référencés 95 ont une double fonction. Quand le longeron est monté pour assurer la fonction de guidage (cf partie droite de la figure 9), l'un des orifices référencés 94 est utilisé pour fixer une équerre 83 (de pied 80) sur la partie inférieure du profil en « C » du corps du longeron, et l'un des orifices référencés 95 est utilisé pour fixer un dispositif de guidage 85 sur la partie supérieure du profil en « C » du corps du longeron. Quand le longeron est monté pour ne pas assurer la fonction de guidage (cf partie gauche de la figure 9), l'un des orifices référencés 95 est utilisé pour fixer une équerre 83 (de pied 80) sur la partie inférieure du profil en « C » du corps du longeron, et l'un des orifices référencés 94 est utilisé pour fixer un dispositif de guidage 85 sur la partie supérieure du profil en « C » du corps du longeron.

Quand le longeron est monté pour assurer la fonction de guidage (cf partie droite de la figure 9), le support 85b traverse un orifice référencé 96 (voir également figure 7) de la partie haute de l'élément de guidage 77 intégré au longeron.

La **figure 9****,** déjà partiellement décrite ci-dessus, illustre trois égalités entre dés distances inter-orifices du longeron de la figure 7, permettant d'assurer diverses continuités (continuité pour des capots, continuité pour des pièces de guidage rapportées et continuité pour des pieds).

La partie droite de la figure 9 montre une vue de côté du longeron droit monté pour assurer la fonction de guidage 70_{a,d}. On y distingue les distances suivantes :
- la distance H1 entre la droite d1 d'alignement des orifices 71 et la droite d3 d'alignement des orifices 72 (voir figure 7) ;
- la distance H1' entre la droite d1 d'alignement des orifices 71 et une droite d'alignement des orifices 95 ;
- la distance H1" entre la droite d1 d'alignement des orifices 71 et une droite d'alignement des orifices 94.

La partie gauche de la figure 9 montre une vue de côté du longeron droit monté pour ne pas assurer la fonction de guidage 70_{s,d}. On y distingue les distances suivantes :
- la distance H2 entre la droite d2 d'alignement des orifices 73 et la droite d4 d'alignement des orifices 74 (voir figure 7).
- la distance H2' entre la droite d2 d'alignement des orifices 73 et une droite d'alignement des orifices 94 ;
- la distance H2" entre la droite d2 d'alignement des orifices 73 et une droite d'alignement des orifices 95.

L'égalité « H1 = H2 permet de garantir une continuité (pas de décalage vertical, et donc continuité de surface) entre deux capots 8 fixés chacun sur un longeron d'une paire de longerons adjacents mais montés en sens inverse. Ceci permet également de garantir qu'un capot 8 peut être monté à cheval sur deux longerons adjacents mais montés en sens inverse.

L'égalité « H1' = H2' » perrnet de garantir une continuité (pas de décalage vertical) entre deux pièces de guidage 85 rapportées chacune sur un longeron d'une paire de longerons adjacents mais montés en sens inverse. Ceci permet également de garantir qu'une pièce de guidage 85 peut être rapportée à cheval sur deux longerons adjacents mais montés en sens inverse.

L'égalité « H1" = H2" » permet de garantir une continuité (pas de décalage vertical) entre deux pieds 80 rapportés chacun sur un longeron d'une paire de longerons adjacents mais montés en sens inverse.

## Revendications

1. Longeron (70) pour convoyeur de charges, comprenant un corps principal (75) comprenant une pluralité d'orifices adaptés chacun pour recevoir une extrémité d'un élément de support de charges, **caractérisé en ce que** le corps principal possède un profil en « C », définissant une cavité (76) destinée à accueillir au moins un câble et/ou au moins un élément de pilotage du convoyeur, ledit profil en « C » comprenant : une partie centrale, une première branche latérale s'étendant sensiblement perpendiculairement à partir d'une première extrémité de la partie centrale, et une deuxième branche latérale s'étendant sensiblement perpendiculairement à partir d'une deuxième extrémité de la partie centrale, le corps principal comprenant dans la partie centrale du profil en « C » :
- un premier ensemble d'orifices (71), débouchant dans la cavité et situés à une première distance prédéterminée (H1') de la deuxième branche latérale du corps principal ; et
- un deuxième ensemble d'orifices (73), débouchant dans la cavité et situés à une deuxième distance prédéterminée (H2') de la première branche latérale du corps principal ; **caracterisé en ce que** le longeron comprend un élément de guidage (77) s'étendant hors de la cavité (76) à partir de la deuxième branche latérale du corps principal,
et **en ce que** le longeron est réversible et possède deux sens de montage :
- un premier sens dans lequel : l'élément de guidage se trouve en dessus du corps principal ; la cavité (76) s'ouvre à l'opposé des éléments de support de charges; et chacun des orifices (71) du premier ensemble peut recevoir une extrémité d'un des éléments de support de charges ;
- un deuxième sens dans lequel : l'élément de guidage se trouve en dessous du corps principal ; la cavité (76) s'ouvre à l'opposé des éléments de support de charges; et chacun des orifices (73) du deuxième ensemble peut recevoir une extrémité d'un des éléments de support de charges.

2. Longeron selon la revendication 1, **caractérisé en ce qu'**il s'agit d'une pièce profilée comprenant le corps principal et l'élément de guidage.

3. Assemblage **caractérisé en ce qu'**il comprend :
- un longeron (70) selon l'une quelconque des revendications 1 et 2 ; et
- une pluralité de crochets porte-câbles (7) fixés au longeron, à l'intérieur de la cavité (76).
et **en ce que** le corps principal du longeron comprend, dans la partie centrale du profil en«C»:
- un troisième ensemble d'orifices (72), débouchant dans la cavité, situés à une troisième distance prédéterminée (H1'+H1) de la deuxième branche latérale du corps principal, et destinés chacun à recevoir un élément de fixation d'un des crochets porte-câbles quand le longeron est monté selon le premier sens ; et
- un quatrième ensemble d'orifices (74), débouchant dans la cavité, situés à une quatrième distance prédéterminée (H2'+H2) de la première branche latérale du corps principal, et destinés chacun à recevoir un élément de fixation d'un des crochets porte-câbles quand le longeron est monté selon le second sens.

4. Assemblage selon la revendication 3, **caractérisé en ce que** au moins un des crochets porte-câbles est fixé au longeron par un élément de fixation servant également à fixer le longeron sur une traverse (6) ou une éclisse (11).

5. Assemblage selon l'une quelconque des revendications 3 et 4, **caractérisé en ce qu'**il comprend au moins un capot (8) adapté pour se fixer sur la pluralité de crochets porte-câbles et fermer la cavité.

6. Assemblage selon la revendication 6, **caractérisé en ce que** les orifices (71) du premier ensemble sont alignés sur une première droite, les orifices (73) du deuxième ensemble sont alignés sur une deuxième droite, les orifices (72) du troisième ensemble sont alignés sur une troisième droite, les orifices (74) du quatrième ensemble sont alignés sur une quatrième droite,
et **en ce que** la distance (H1) entre les première et troisième droites est égale à la distance (H2) entre les deuxième et quatrième droites.

7. Assemblage **caractérisé en ce qu'**il comprend :
- un longeron (70) selon l'une quelconque des revendications 1 et 2 ; et
- au moins une pièce de guidage (85) fixée au longeron.
et **en ce que** le corps principal du longeron comprend :
- dans la deuxième branche latérale du corps principal, un cinquième ensemble d'orifices (95), débouchant dans la cavité et destinés chacun à recevoir un élément de fixation de ladite au moins une pièce de guidage (85), rapportée par le dessus au longeron, quand le longeron est monté selon le premier sens ; et
- dans la première branche latérale du corps principal, un sixième ensemble d'orifices (94), débouchant dans la cavité et destinés chacun à recevoir un élément de fixation de ladite au moins une pièce de guidage (85), rapportée par le dessus au longeron, quand le longeron est monté selon le second sens.

8. Assemblage selon la revendication 7, **caractérisé en ce que** les orifices (71) du premier ensemble sont alignés sur une première droite, les orifices (73) du deuxième ensemble sont alignés sur une deuxième droite, les orifices (95) du cinquième ensemble sont alignés sur une cinquième droite, les orifices (94) du sixième ensemble sont alignés sur une sixième droite,
et **en ce que** la distance (H1') entre les première et cinquième droites est égale à la distance (H2') entre les deuxième et sixième droites.

9. Assemblage **caractérisé en ce qu'**il comprend :
- un longeron (70) selon l'une quelconque des revendications 1 et 2 ; et
- au moins un pied (80) fixé au longeron.
et ce que le corps principal du longeron comprend :
- dans la première branche latérale du corps principal, un septième ensemble d'orifices (94), débouchant dans la cavité et destinés chacun à recevoir un élément de fixation dudit au moins un pied (80), rapporté par le dessous au longeron, quand le longeron est monté selon le premier sens ; et
- dans la deuxième branche latérale du corps principal, un huitième ensemble d'orifices (95), débouchant dans la cavité et destinés chacun à recevoir un élément de fixation dudit au moins un pied (80), rapporté par le dessous au longeron, quand le longeron est monté selon le second sens.

10. Assemblage selon la revendication 9, **caractérisé en ce que** les orifices (71) du premier ensemble sont alignés sur une première droite, les orifices (73) du deuxième ensemble sont alignés sur une deuxième droite, les orifices (94) du septième ensemble sont alignés sur une septième droite, les orifices (95) du huitième ensemble sont alignés sur une huitième droite,
et **en ce que** la distance (H1") entre les première et septième droites est égale à la distance (H2") entre les deuxième et huitième droites.

11. Assemblage selon l'une des revendications 7 et 8 et l'une des revendications 9 et 10, **caractérisé en ce que** le sixième ensemble d'orifices et le septième ensemble d'orifices sont confondus, et **en ce que** le cinquième ensemble d'orifices et le huitième ensemble d'orifices sont confondus.

12. Procédé d'assemblage d'un longeron (70) selon l'une quelconque des revendications 1 et 2, le longeron (70) étant réversible et possédant deux sens de montage :
un premier sens dans lequel : l'élément de guidage se trouve en dessus du corps principal ; la cavité (76) s'ouvre à l'opposé des éléments de support de charges; et chacun des orifices (71) du premier ensemble peut recevoir une extrémité d'un des éléments de support de charges ;
un deuxième sens dans lequel : l'élément de guidage se trouve en dessous du corps principal ; la cavité (76) s'ouvre à l'opposé des éléments de support de charges ; et chacun des orifices (73) du deuxième ensemble peut recevoir une extrémité d'un des éléments de support de charges.

## Patentansprüche

1. Längsträger (70) zum Fördern von Lasten, der einen Hauptkörper (75) aufweist, welcher selbst eine Vielzahl von Öffnungen aufweist, die jeweils für die Aufnahme eines Endes eines Lastenträgerelementes ausgelegt sind, **dadurch gekennzeichnet, dass** der Hauptkörper ein "C"-Profil aufweist, das einen Hohlraum (76) bildet, der mindestens ein Kabel und/oder mindestens ein Steuerelement des Lastenfördersystems aufnimmt, wobei das "C"-Profil folgendes umfasst: einen Mittelteil, einen ersten seitlichen Zweig, der sich in etwa senkrecht ab einem ersten Ende des Mittelteils erstreckt und einen zweiten seitlichen Zweig, der sich in etwa senkrecht ab einem zweiten Ende des Mittelteils erstreckt, wobei der Hauptkörper folgendes im mittleren Teil des "C"-Profils umfasst:
- eine erste Gruppe von Öffnungen (71), die in den Hohlraum münden und in einer ersten vorgegebenen Entfernung (H1') des zweiten seitlichen Zweiges des Hauptkörpers liegen und,
- eine zweite Gruppe von Öffnungen (73), die in den Hohlraum münden und in einer zweiten vorgegebenen Entfernung (H2') des ersten seitlichen Zweiges des Hauptkörpers liegen,
**dadurch gekennzeichnet, dass** der Längsträger ein Führungselement (77) aufweist, das sich ab dem zweiten seitlichen Zweig des Hauptkörpers aus dem Hohlraum (76) erstreckt und, dadurch, dass der Längsträger umkehrbar ist und zwei Einbaurichtungen aufweist:
- eine erste Richtung, bei der das Führungselement oberhalb des Hauptkörpers liegt; dabei eröffnet sich der Hohlraum (76) in entgegengesetzter Richtung zu den Lastenträgerelementen und jede Öffnung (71) der ersten Gruppe kann ein Ende eines der Lastenträgerelemente aufnehmen;
- eine zweite Richtung, bei der das Führungselement unterhalb des Hauptkörpers liegt; dabei eröffnet sich der Hohlraum (76) in entgegengesetzter Richtung zu den Lastenträgerelementen und jede Öffnung (73) der zweiten Gruppe kann ein Ende eines der Lastenträgerelemente aufnehmen.

2. Längsträger nach Anspruch 1, **dadurch gekennzeichnet, dass** es sich um ein Profilteil handelt, das den Hauptkörper und das Führungselement umfasst.

3. Zusammengesetzes System, das **dadurch gekennzeichnet ist, dass** es folgendes umfasst:
- einen Längsträger (70) nach einem der Ansprüche 1 oder 2 und,
- eine Vielzahl von Kabelträgerhaken (7) die im Inneren des Hohlraums (76) am Längsträger befestigt sind und,
dadurch, dass der Hauptkörper des Längsträgers im mittleren Teil des "C"-Profils folgendes umfasst:
- eine dritte Gruppe von Öffnungen (72), die in den Hohlraum münden, die in einer dritten vorgegebenen Entfernung (H1' + H1) des zweiten seitlichen Zweiges des Hauptkörpers liegen und jeweils ein Befestigungselement eines der Kabelträgerhaken aufnehmen sollen, wenn der Längsträger nach der ersten Richtung eingebaut ist und,
- eine vierte Gruppe von Öffnungen (74), die in den Hohlraum münden, die in einer vierten vorgegebenen Entfernung (H2' + H2) des ersten seitlichen Zweiges des Hauptkörpers liegen und jeweils ein Befestigungselement eines der Kabelträgerhaken aufnehmen sollen, wenn der Längsträger nach der zweiten Richtung eingebaut ist.

4. Zusammengesetztes System nach Anspruch 3, **dadurch gekennzeichnet, dass** mindestens eines der Kabelträgerhaken über ein Befestigungselement mit dem Längsträger befestigt ist, wobei dieses Befestigungselement ebenfalls dazu dient, den Längsträger an einer Querstrebe (6) oder einer Verbindungslasche (11) zu befestigen.

5. Zusammengesetztes System nach einem der Ansprüche 3 oder 4, **dadurch gekennzeichnet, dass** es mindestens eine Haube (8) umfasst, die so ausgelegt ist, dass sie auf der Menge der Kabelträgerhaken befestigt werden kann, um somit den Hohlraum zu verschließen.

6. Zusammengesetztes System nach Anspruch 6, **dadurch gekennzeichnet, dass** die Öffnungen der ersten Gruppe (71) auf einer ersten geraden Linie angeordnet sind, die Öffnungen der zweiten Gruppe (73) auf einer zweiten geraden Linie angeordnet sind, die Öffnungen der dritten Gruppe (72) auf einer dritten geraden Linie angeordnet sind, die Öffnungen der vierten Gruppe (74) auf einer vierten geraden Linie angeordnet sind und, dass der Abstand (H1) zwischen der ersten und der dritten geraden Linie dem Abstand (H2) zwischen der zweiten und der vierten geraden Linie gleicht.

7. Zusammengesetztes System, **dadurch gekennzeichnet, dass** es folgendes umfasst:
- einen Längsträger (70) nach einem der Ansprüche 1 oder 2 und,
- mindestens ein an dem Längsträger befestigtes Führungsteil (85), und
dass der Hauptkörper des Längsträgers folgendes umfasst:
- eine fünfte Gruppe von Öffnungen (95) im zweiten seitlichen Zweig des Hauptkörpers, welche im Hohlraum münden und jeweils ein Befestigungselement des besagten mindestens einen Führungsteils (85) aufnehmen sollen, wobei das Führungsteil oberhalb des Längsträgers angebracht ist, wenn der Längsträger nach der ersten Richtung eingebaut ist und,
- eine sechste Gruppe von Öffnungen (94) im ersten seitlichen Zweig des Hauptkörpers, welche im Hohlraum münden und jeweils ein Befestigungselement des besagten mindestens einen Führungsteils (85) aufnehmen sollen, wobei das Führungsteil oberhalb des Längsträgers angebracht ist, wenn der Längsträger nach der zweiten Richtung eingebaut ist.

8. Zusammengesetztes System nach Anspruch 7, **dadurch gekennzeichnet, dass** die Öffnungen (71) der ersten Gruppe auf einer ersten geraden Linie angeordnet sind, die Öffnungen (73) der zweiten Gruppe auf einer zweiten geraden Linie angeordnet sind, die Öffnungen (95) der fünften Gruppe auf einer fünften geraden Linie angeordnet sind, die Öffnungen (94) der sechsten Gruppe auf einer sechsten geraden Linie angeordnet sind und, dass der Abstand (H1') zwischen der ersten und der fünften geraden Linie dem Abstand (H2') zwischen der zweiten und der sechsten geraden Linie gleich ist.

9. Zusammengesetztes System, **dadurch gekennzeichnet, dass** es folgendes umfasst:
- einen Längsträger (70) nach einem der Ansprüche 1 oder 2 und,
- mindestens einen an dem Längsträger befestigten Fuß (80) und,
dass der Hauptkörper des Längsträgers folgendes umfasst:
- im ersten seitlichen Zweig des Hauptkörpers, eine siebte Gruppe von Öffnungen (94), die in den Hohlraum münden und jeweils ein Befestigungselement des besagten mindestens einen Fußes (80) aufnehmen sollen, wobei dieses Element unterhalb des Längsträgers angebracht ist, wenn dieser nach der ersten Richtung eingebaut ist, und
- im zweiten seitlichen Zweig des Hauptkörpers, eine achte Gruppe von Öffnungen (95), die in den Hohlraum münden und jeweils ein Befestigungselement des besagten mindestens einen Fußes (80) aufnehmen sollen, wobei dieses Element unterhalb des Längsträgers angebracht ist, wenn dieser nach der zweiten Richtung eingebaut ist.

10. Zusammengesetztes System nach Anspruch 9, **dadurch gekennzeichnet, dass** die Öffnungen (71) der ersten Gruppe auf einer ersten geraden Linie angeordnet sind, die Öffnungen (73) der zweiten Gruppe auf einer zweiten geraden Linie angeordnet sind, die Öffnungen (94) der siebten Gruppe auf einer siebten geraden Linie angeordnet sind, die Öffnungen (95) der achten Gruppe auf einer achten geraden Linie angeordnet sind und, dass der Abstand (H1") zwischen der ersten und der siebten geraden Linie dem Abstand (H2") zwischen der zweiten und der achten geraden Linie gleicht.

11. Zusammengesetztes System nach einem der Ansprüche 7 oder 8 oder nach einem der Ansprüche 9 oder 10, **dadurch gekennzeichnet, dass** die sechste und die siebte Gruppe von Öffnungen dieselben sind und, dass die fünfte und die achte Gruppe von Öffnungen dieselben sind.

12. Vorgang für den Zusammenbau eines Längsträgers (70) nach einem der Ansprüche 1 oder 2, wobei der Längsträger (70) umkehrbar ist und zwei Einbaurichtungen aufweist:
- eine erste Einbaurichtung bei der das Führungselement oberhalb des Hauptkörpers angebracht ist; der Hohlraum (76) öffnet sich dann in entgegengesetzter Richtung zu den Lastenträgerelementen und jede der Öffnungen (71) der ersten Gruppe (71) kann ein Ende eines der Lastenträgerelemente aufnehmen;
- eine zweite Einbaurichtung bei der das Führungselement unterhalb des Hauptkörpers angebracht ist; der Hohlraum (76) öffnet dann in entgegengesetzter Richtung zu den Lastenträgerelementen und jede der Öffnungen (73) der zweiten Gruppe kann ein Ende eines der Lastenträgerelemente aufnehmen.

## Claims

1. Longitudinal member (70) for a load conveyor, said member comprising a main body (75) comprising a plurality of orifices which are each adapted to receive one end of a load-bearing element, **characterised in that** the main body possesses a "C"-shaped profile defining a cavity (76) which is intended to receive at least one cable and/or at least one element for controlling the conveyor, the said "C"-shaped profile comprising: a central part, a first lateral arm which extends substantially perpendicularly from a first end of the central part, and a second lateral arm which extends substantially perpendicularly from a second end of said central part,
the main body comprising, in the central part of the "C"-shaped profile:
- a first set of orifices (71) which open into the cavity and are situated at a first predetermined distance (H1') from the second lateral arm of the main body; and
- a second set of orifices (73) which open into the cavity and are situated at a second predetermined distance (H2') from the first lateral arm of the main body;
**characterised in that** the longitudinal member comprises a guiding element (77) which extends out of the cavity (76) from the second lateral arm of the main body,
and **in that** the longitudinal member is reversible and possesses two mounting directions:
- a first direction in which: the guiding element is located above the main body; the cavity (76) opens opposite the load-bearing elements; and each of the orifices (71) belonging to the first set is capable of receiving one end of one of the load-bearing elements;
- a second direction in which: the guiding element is located below the main body; the cavity (76) opens opposite the load-bearing elements; and each of the orifices (73) belonging to the second set is capable of receiving one end of one of the load-bearing elements.

2. Longitudinal member according to Claim 1, **characterised in that** the longitudinal member is a profiled piece which comprises the main body and the guiding element.

3. Assembly **characterised in that** it comprises:
- a longitudinal member (70) according to either of Claims 1 or 2; and
- a plurality of cable-carrying hooks (7) which are fixed to said longitudinal member inside the cavity (76),
and **in that** the main body of the longitudinal member comprises, in the central part of the "C"-shaped profile:
- a third set of orifices (72) which open into the cavity, are situated at a third predetermined distance (H1'+H1) from the second lateral arm of the main body and are each intended to receive an element for fixing one of the cable-carrying hooks when the longitudinal member is mounted in the first direction; and
- a fourth set of orifices (74) which open into the cavity, are situated at a fourth predetermined distance (H2'+H2) from the first lateral arm of the main body and are each intended to receive an element for fixing one of the cable-carrying hooks when the longitudinal member is mounted in the second direction.

4. Assembly according to Claim 3, **characterised in that** at least one of the cable-carrying hooks is fixed to the longitudinal member by a fixing element which also serves to fix said longitudinal member onto a cross-member (6) or a fishplate (11).

5. Assembly according to either of Claims 3 or 4, **characterised in that** it comprises at least one cover (8) which is adapted to be fixed onto the plurality of cable-carrying hooks and to close the cavity.

6. Assembly according to Claim 3, **characterised in that** the orifices (71) belonging to the first set are aligned on a first straight line, the orifices (73) belonging to the second set are aligned on a second straight line, the orifices (72) belonging to the third set are aligned on a third straight line, the orifices (74) belonging to the fourth set are aligned on a fourth straight line;
and **in that** the distance (H1) between the first and third straight lines is equal to the distance (H2) between the second and fourth straight lines.

7. Assembly **characterised in that** it comprises:
- a longitudinal member (70) according to either of Claims 1 or 2; and
- at least one guiding piece (85) fixed to said longitudinal member,
and **in that** the main body of the longitudinal member comprises:
- in the second lateral arm of the main body, a fifth set of orifices (95) which open into the cavity and are each intended to receive an element for fixing the said at least one guiding piece (85), which is added on, from above, to the longitudinal member, when said longitudinal member is mounted in the first direction; and
- in the first lateral arm of the main body, a sixth set of orifices (94) which open into the cavity and are each intended to receive an element for fixing the said at least one guiding piece (85), which is added on, from above, to the longitudinal member, when said longitudinal member is mounted in the second direction.

8. Assembly according to Claim 7, **characterised in that** the orifices (71) belonging to the first set are aligned on a first straight line, the orifices (73) belonging to the second set are aligned on a second straight line, the orifices (95) belonging to the fifth set are aligned on a fifth straight line, the orifices (94) belonging to the sixth set are aligned on a sixth straight line;
and **in that** the distance (H1') between the first and fifth straight lines is equal to the distance (H2') between the second and sixth straight lines.

9. Assembly **characterised in that** it comprises:
- a longitudinal member (70) according to either of Claims 1 or 2; and
- at least one foot (80) fixed to said longitudinal member,
and **in that** the main body of the longitudinal member comprises:
- in the first lateral arm of the main body, a seventh set of orifices (94) which open into the cavity and are each intended to receive an element for fixing the said at least one foot (80), which is added on, from below, to the longitudinal member, when said longitudinal member is mounted in the first direction; and
- in the second lateral arm of the main body, an eighth set of orifices (95) which open into the cavity and are each intended to receive an element for fixing the said at least one foot (80), which is added on, from below, to the longitudinal member, when said longitudinal member is mounted in the second direction.

10. Assembly according to Claim 9, **characterised in that** the orifices (71) belonging to the first set are aligned on a first straight line, the orifices (73) belonging to the second set are aligned on a second straight line, the orifices (94) belonging to the seventh set are aligned on a seventh straight line, the orifices (95) belonging to the eighth set are aligned on an eighth straight line;
and **in that** the distance (H1") between the first and seventh straight lines is equal to the distance (H2") between the second and eighth straight lines.

11. Assembly according to either of Claims 7 or 8 and either of Claims 9 or 10, **characterised in that** the sixth set of orifices and the seventh set of orifices coincide, and **in that** the fifth set of orifices and the eighth set of orifices coincide.

12. Method of assembling a longitudinal member (70) according to either of Claims 1 or 2, said longitudinal member (70) being reversible and possessing two mounting directions:
a first direction in which: the guiding element is located above the main body; the cavity (76) opens opposite the load-bearing elements; and each of the orifices (71) belonging to the first set is capable of receiving one end of one of the load-bearing elements;
a second direction in which: the guiding element is located below the main body; the cavity (76) opens opposite the load-bearing elements; and each of the orifices (73) belonging to the second set is capable of receiving one end of one of the load-bearing elements.
